# EUROPÄISCHE PATENTSCHRIFT

(11) **EP 2 249 989 B1**
(45) Veröffentlichungstag und Bekanntmachung des Hinweises auf die Patenterteilung: **29.07.2015**
(21) Anmeldenummer: 08872201.2
(22) Anmeldetag: 07.11.2008
(51) Int. Cl.: B23D 45/04, B27B 5/29

(54) **KAPPSÄGE MIT NUTTIEFENANSCHLAG**
CIRCULAR SAW PROVIDED WITH A CUTTING DEPTH STOP
SCIE CIRCULAIRE ÉQUIPÉE D'UNE BUTÉE DE PROFONDEUR DE COUPE

(30) Priorität: 07.02.2008 DE 202008001742 U
(43) Veröffentlichungstag der Anmeldung: 17.11.2010
(73) Patentinhaber: Metabowerke GmbH, 72622 Nürtingen (DE)
(72) Erfinder: WINKLER, Stefan, 49757 Lahn (DE)
(74) Vertreter: Lorenz, Markus
(86) Internationale Anmeldenummer: PCT/EP2008/009394
(87) Internationale Veröffentlichungsnummer: WO 2009/097876

(56) Entgegenhaltungen:
- EP-A- 1 510 307
- JP-A- 4 201 011
- JP-A- 11 034 002

## Beschreibung

Die Erfindung betrifft eine Kappsäge mit den Merkmalen des Oberbegriffs von Anspruch 1. Eine solche Säge ist aus EP 1 510 307 A1 bekannt.

Kappsägen der in Rede stehenden Art sind seit Jahrzehnten bekannt (EP-A-1 557 231). Sie werden zur Bearbeitung aller Arten von Werkstoffen eingesetzt. Ein besonderes Anwendungsfeld finden Kappsägen bei der Holzbearbeitung. Sie sind aber auch für die Kunststoffbearbeitung und die Metallbearbeitung zu finden.

Eine typische Kappsäge hat ein um eine Querachse schwenkbar angebrachtes Sägeaggregat, dessen Sägeblatt aus einer angehobenen Ruhestellung in eine abgesenkte Sägestellung und umgekehrt schwenkbar ist. Mit dieser Bewegung des Sägeblattes kann ein auf einer Werkstückauflagefläche eines Trägers befindliches Werkstück abgeschnitten - gekappt - werden.

Kappsägen sind aber nicht nur mit um eine Querachse schwenkbar angebrachtem Sägeaggregat bekannt, sondern auch mit einem in Längsrichtung über die Werkstückauflagefläche ziehbaren Sägeaggregat als sog. Radialarmsägen.

Das Sägeaggregat einer Kappsäge ist normalerweise in Richtung der Ruhestellung vorgespannt. Das geschieht meist durch eine Federanordnung, bei älteren Konstruktionen auch noch durch ein Gegengewicht. Entgegen der Vorspannkraft wird das Sägeaggregat an einem Betätigungshandgriff angefaßt und zum Ausführen des Sägeschnittes nach unten geschwenkt bis das auf der Werkstückauflagefläche befindliche Werkstück vollständig durchtrennt ist. Dabei tritt ein kleines Teilstück des Sägeblattes des Sägeaggregates randseitig in einen Eintauchschlitz in der Werkstückauflagefläche ein.

Die bekannte Kappsäge, von der die Erfindung ausgeht (DE-U-203 13 885), ist eine Kapp-, Gehrungs- und Zugsäge, mit der Kappschnitte, Gehrungsschnitte und Schifterschnitte (Doppel-Gehrungs-Schnitte) ausgeführt werden können. Wegen der außerdem wie bei einer Radialarmsäge realisierten Zugfunktion können die ausgeführten Schnitte länger sein als es der wirksame Schnitthalbmesser des Sägeblattes vorgibt.

Bei der bekannten Kappsäge ist das Sägeaggregat mittels einer Halterung am Träger angebracht. Bei der Kappfunktion wird das Sägeaggregat um eine Querachse aus der angehobenen Ruhestellung in die abgesenkte Sägestellung und umgekehrt geschwenkt.

Da die zuvor erläuterte bekannte Kappsäge auch eine Zugfunktion hat, kann man in einem auf der Werkstückauflage befindlichen Werkstück nicht nur einen Kappschnitt ausführen, sondern auch eine Nut anbringen. Dabei wird das Werkstück nicht vollständig durchtrennt, sondern das Sägeaggregat wird in einer nicht ganz abgesenkten Stellung fixiert und dann linear durch das Werkstück gezogen.

Um bei dem zuvor erläuterten Nuten eines Werkstückes die Tiefe der Nut vorgeben zu können, hat eine solche Kappsäge mit Zugfunktion einen Nuttiefenanschlag, der ein manuell aktivierbares Anschlagelement aufweist. In aktivierter Position befindet sich das Anschlagelement in der Bewegungsbahn eines Gegenanschlags am Sägeaggregat. Ist das Anschlagelement deaktiviert, so befindet es sich außerhalb der Bewegungsbahn des Gegenanschlags und das Sägeaggregat kann bis in seine tiefste Stellung, die vollständige Sägestellung, nach unten geschwenkt werden.

Bei der bekannten Kappsäge, von der die Erfindung ausgeht, ist das Anschlagelement an der Halterung um eine im wesentlichen senkrecht zur Werkstückauflagefläche verlaufende Achse schwenkbar angeordnet. Zum Aktivieren wird es seitlich in die Bewegungsbahn des Gegenanschlags am Sägeaggregat eingeschwenkt. Wird es nicht benötigt, so klappt man es in seine deaktivierte Stellung zurück. Am Anschlagelement selbst befindet sich wiederum ein verstellbarer Anschlagpuffer, so daß die Nuttiefe durch Verstellen des Anschlagpuffers unterschiedlich gewählt werden kann.

Die Konstruktion des Nuttiefenanschlags bei der bekannten Kappsäge wirkt klapprig. Außerdem kann es passieren, daß das Anschlagelement versehentlich in die Bahn des Gegenanschlags geklappt wird oder sich auch nur halb in dieser Bewegungsbahn befindet. Das kann zu unangenehmen Fehlern beim Nuten von Werkstücken führen.

Der Lehre liegt daher das Problem zugrunde, die bekannte Kappsäge mit einem optimierten Nuttiefenanschlag zu versehen.

Die zuvor aufgezeigte Problemstellung ist bei einer Kappsäge mit den Merkmalen des Oberbegriffs von Anspruch 1 durch die Merkmale des kennzeichnenden Teils von Anspruch 1 gelöst.

Dadurch, daß der Nuttiefenanschlag an der Querachse selbst angeordnet ist, kann das Anschlagelement durch eine Verschiebebewegung in Richtung der Querachse verlagert werden. Das Anschlagelement wird also nicht mehr hin- und hergeklappt, es wird durch eine lineare Verschiebung in Richtung der Querachse aktiviert und deaktiviert. Das ist eine raffinierte Betätigungsart. Durch geschickte konstruktive Ausgestaltung dieser Verschiebebetätigung kann ein versehentliches Betätigen der Nutfunktion nahezu sicher unterbunden werden.

Bevorzugte Ausgestaltungen und Weiterbildungen der erfindungsgemäßen Lehre sind Gegenstand der Unteransprüche.

Ist die Querachse körperlich vorhanden, so kann man vorsehen, daß das Anschlagelement auf der körperlich vorhandenen Querachse selbst linear verschiebbar gelagert ist. Die Querachse kann seitlich einfach etwas verlängert werden oder es wird in einem Lager eine entsprechende Ausnehmung vorgesehen.

Von besonderer Bedeutung ist dabei eine Konstruktion, bei der vorgesehen ist, daß das Anschlagelement mit einem seitlich an der Halterung sitzenden Betätigungselement, insbesondere einem Betätigungsknauf, gekoppelt ist und die Verschiebebewegung des Anschlagelements durch eine Drehbewegung des Betätigungselements um die Querachse antreibbar ist. Durch eine komfortable, kompakte Drehbewegung am Betätigungselement, vorzugsweise bis zu einem Einrasten des Betätigungselementes sobald das Anschlagelement seine aktivierte Stellung erreicht hat, ergibt sich ein vorzüglicher Bedienungskomfort.

Von besonderer Bedeutung ist ferner eine Konstruktion, bei der vorgesehen ist, daß die Kopplung zwischen dem Betätigungselement und dem Anschlagelement als schraubenlinienförmiges, nicht selbsthemmendes Keilgetriebe ausgeführt ist. Ein solches nichtselbsthemmendes Keilgetriebe ist insbesondere zweckmäßig einsetzbar in Verbindung mit einer Feder, durch die das Anschlagelement in Richtung seiner deaktivierten Stellung vorgespannt ist. Durch eine Drehbewegung des Betätigungselementes in einer Drehrichtung kann das Anschlagelement in seine aktivierte Stellung gebracht werden. Dabei wird die Feder gespannt. Rastet das Betätigungselement direkt oder an dem schraubenlinienförmigen Keilgetriebe ein, so ist dieser Zustand vorübergehend fixiert. Wird das Betätigungselement in der Gegenrichtung betätigt, so rastet es aus und die Feder drückt das Anschlagelement unter Rückdrehung des Betätigungselementes in seine Ausgangsstellung in die deaktivierte Stellung zurück.

Im folgenden wird nun die Erfindung anhand einer lediglich ein Ausführungsbeispiel darstellenden Zeichnung näher erläutert. In der Zeichnung zeigt
- Fig. 1: in perspektivischer Darstellung ein Ausführungsbeispiel einer erfindungsgemäßen Kappsäge mit dem Sägeaggregat in Ruhestellung,
- Fig. 2: einen Ausschnitt aus Fig. 1 mit dem Nuttiefenanschlag in vergrößerter Darstellung,
- Fig. 3: in einer Fig. 1 entsprechenden Darstellung die Kappsäge mit dem Sägeaggregat in Nutstellung,
- Fig. 4: in einem Fig. 2 entsprechenden Ausschnitt den aktivierten Nuttiefenanschlag und
- Fig. 5: in einer Sprengdarstellung die für die Konstruktion des Nuttiefenanschlags wesentlichen Teile der erfindungsgemäßen Kappsäge.

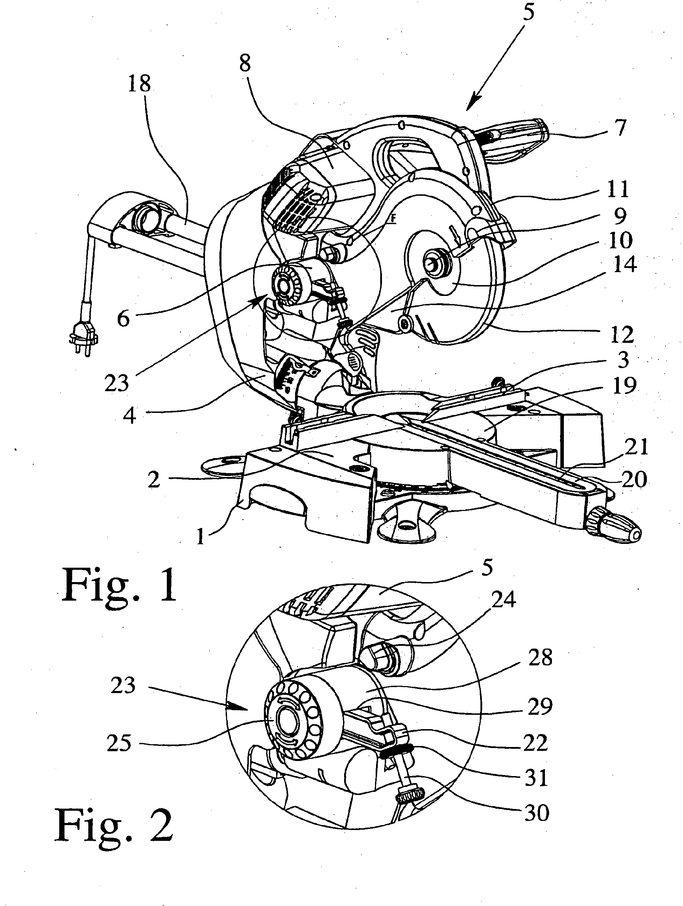

Fig. 1 zeigt eine Kappsäge, genauer gesagt eine Kapp-, Gehrungssäge- und Zugsäge.

Die in Fig. 1 dargestellte Kappsäge weist zunächst einen Träger 1 auf, der eine Werkstückauflagefläche 2 bildet. Das rückwärtige Ende der Werkstückauflagefläche 2 bildet hier eine Anschlagschiene 3, an der ein Werkstück, beispielsweise eine Holzleiste, angelegt werden kann. Am Träger 1 ist eine Halterung 4 angebracht, die rückwärtig hinter der Werkstückauflagefläche 2 liegt.

An der Halterung 4 oberhalb des Trägers 1 angebracht ist ein Sägeaggregat 5. Dieses ist im dargestellten und bevorzugten Ausführungsbeispiel um eine Querachse 6 schwenkbar und befindet sich oberhalb der Werkstückauflagefläche 2.

Bei der dargestellten Kappsäge wird das Sägeaggregat 5 um die Querachse 6 aus einer angehobenen Ruhestellung, die in Fig. 1 zu erkennen ist, in eine abgesenkte Sägestellung, die hier nicht dargestellt ist, und umgekehrt geschwenkt. Das Sägeaggregat 5 ist dabei in Richtung der Ruhestellung, also nach oben hin vorgespannt, insbesondere durch eine Feder. Dadurch kehrt das Sägeaggregat 5, wenn man es losläßt, von selbst wieder in die angehobene Ruhestellung zurück.

Das Sägeaggregat 5 weist auf,
- einen Betätigungshandgriff 7,
- einen Antriebsmotor 8
- ein vom Antriebsmotor 8 angetriebenes, auf einer Welle 9 gelagertes Sägeblatt 10,
- eine das Sägeblatt 10 von oben her etwa über die Hälfte abdeckende feststehende Schutzhaube 11,
- eine Pendelschutzhaube 12, die in der in Fig. 1 dargestellten Ruhestellung den unteren Teil des Zahnkranzes des Sägeblattes 10 abdeckt,
- einen Absaugstutzen 13 einer Staubfangvorrichtung und
- eine im Bereich zwischen der Halterung 4 und der Welle 9 unterhalb der feststehenden Schutzhaube 11 angeordnete bewegliche Staubfanghaube 14.

Letzteres ist eine besondere Ausstattung der Kappsäge, die nicht immer verwirklicht sein muß, aber in besonders zweckmäßiger Weise hier verwirklicht ist.

Die dargestellte Kappsäge hat neben der zuvor bereits beschriebenen Kappfunktion eine Gehrungsfunktion. Es handelt sich also zunächst bereits um eine Kappund Gehrungssäge.

Die dargestellte und bevorzugte Kappsäge hat jedoch nicht nur eine Kappfunktion und eine Gehrungsfunktion, sie hat auch eine Zugfunktion. Das Sägeaggregat 5 ist an der Halterung 4 nicht nur mittels der Querachse 6 schwenkbar gelagert, sondern zusätzlich auch noch mittels einer in Sägerichtung verlaufenden Zuführung 18 aus zwei parallel zueinander verlaufenden Zugstangen 18 a,b verschiebbar gelagert. Mit dieser Zugfunktion läßt sich der vom Sägeaggregat 5 ausführbare Sägeschnitt verlängern und sie ist Voraussetzung für eine Nutfunktion der Kappsäge.

Das dargestellte und bevorzugte Ausführungsbeispiel zeigt am Träger 1 einen eingelassenen Drehteller 19 mit einem nach vorne vorspringenden Auslegerarm 20 und mit einem Eintauchschlitz 21, in den in Sägestellung der Rand des Sägeblattes 10 eintritt. Die Länge des Eintauchschlitzes 21 ist wesentlich größer als es für den Durchmesser des Sägeblattes 10 erforderlich ist. Das liegt an der zuvor erläuterten Zuführung 18, die eben auch ein Ziehen des Sägeblattes 10 durch das Werkstück über einen bestimmten Weg erlaubt.

Bei der vorliegenden Erfindung geht es um die Möglichkeit, mit einer Kappsäge der in Rede stehenden Art in einem Werkstück eine Nut bestimmter Tiefe anzubringen. Die Zuführung 18 erlaubt eine solche Nutfunktion.

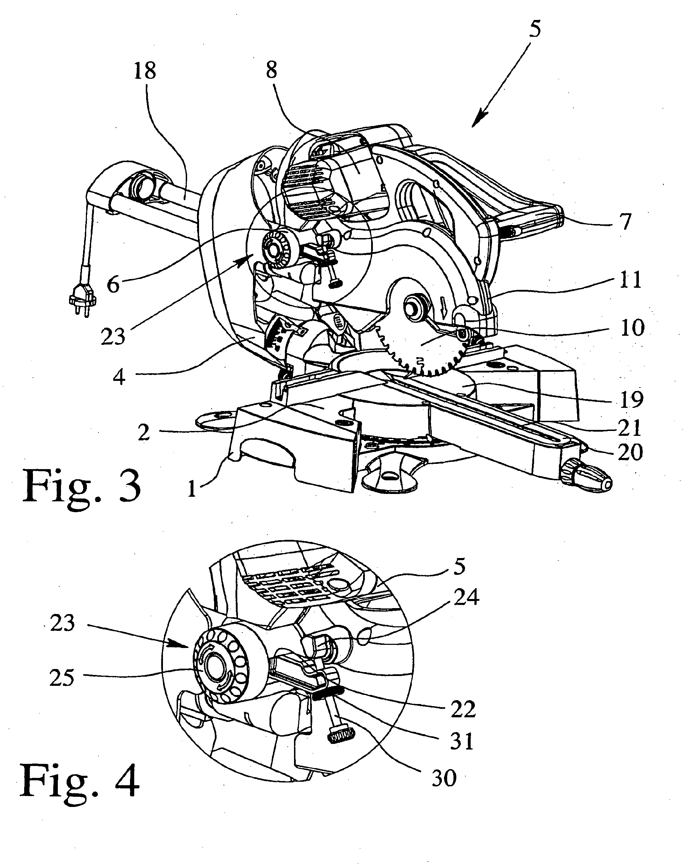

Fig. 3 zeigt die Kappsäge aus Fig. 1 mit nach unten abgesenktem Sägeaggregat 5. Dieses hat jedoch nicht seine tiefste Sägestellung erreicht, in der das Sägeblatt 10 randseitig in den Eintauchschlitz 21 im Drehteller 19 und Auslegerarm 20 eintritt. Man sieht, daß der Zahnkranz des Sägeblattes 10 etwas oberhalb der Werkstückauflagefläche 2 liegt. Dies wird bewirkt durch ein manuell aktivierbares Anschlagelement 22 eines insgesamt realisierten Nuttiefenanschlags 23. Dieses liegt aktiviert in der Bewegungsbahn eines Gegenanschlags 24 am Sägeaggregat 5, was man in Fig. 4 erkennt, befindet sich hingegen deaktiviert außerhalb der Bewegungsbahn des Gegenanschlags 24, was man in Fig. 2 erkennt. In Fig. 2 liegt das Anschlagelement 22 nämlich links außerhalb der Bewegungsbahn des Gegenanschlags 24. In Fig. 4 ist es nach rechts gerückt und der Gegenanschlag 24 trifft beim Herunterschwenken des Sägeaggregates 5 um die Querachse 6 auf das Anschlagelement 22. Dadurch wird das weitere Herabschwenken des Sägeaggregates 5 gestoppt. Hält man das Sägeaggregat 5 in dieser Stellung fest und zieht es dann an der Zuführung 18 nach vorn, so kann man in dem auf der Werkstückauflagefläche 2 festgehaltenen Werkstück eine Längsnut bestimmter Tiefe einbringen.

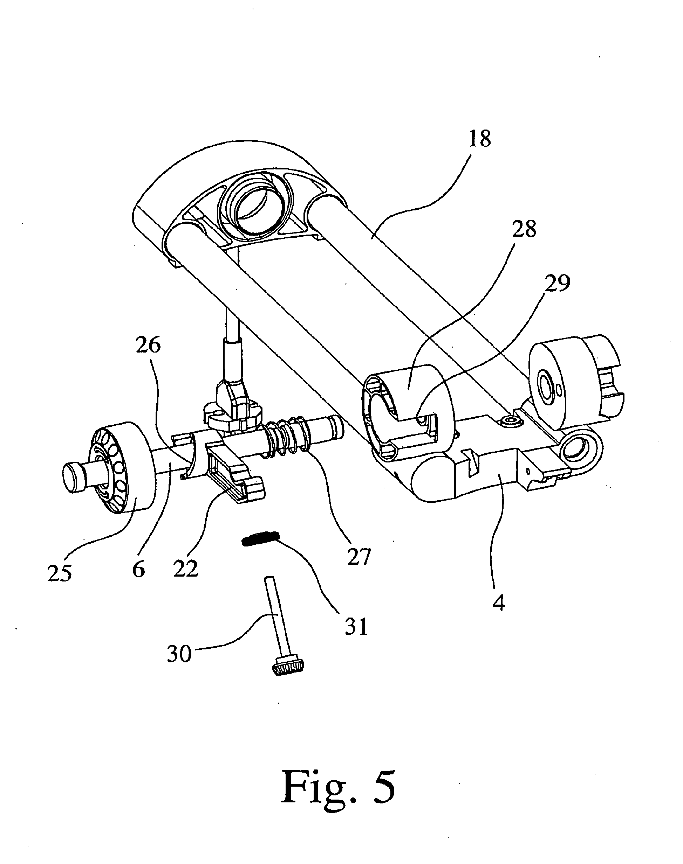

Aus einem Vergleich von Fig. 2 und Fig. 4 sowie mit Blick auf Fig. 5 erkennt man, daß erfindungsgemäß der Nuttiefenanschlag 23 an der Querachse 6 angeordnet ist. Das Anschlagelement 22 des Nuttiefenanschlags 23 wird durch eine Verschiebebewegung in Richtung der Querachse 6 aktiviert (Fig. 4) und deaktiviert (Fig. 2).

Fig. 5 läßt erkennen, daß hier die Querachse 6 der Halterung 4 körperlich vorhanden ist und daß das Anschlagelement 22 des Nuttiefenanschlags 23 auf der körperlich vorhandenen Querachse 6 linear verschiebbar gelagert ist. Man erkennt, daß im dargestellten Ausführungsbeispiel das Anschlagelement 22 mit einem seitlich an der Halterung 4 sitzenden Betätigungselement 25 gekuppelt ist. Im dargestellten und bevorzugten Ausführungsbeispiel ist dieses Betätigungselement 25 als kompakter Betätigungsknauf, ggf. mit einer Rändelung, ausgeführt. Die Verschiebebewegung des Anschlagelements 22 wird durch die Drehung des Betätigungselements 25 um die Querachse 6 angetrieben. Eine Bedienungsperson kann ganz einfach links an die Seite des Sägeaggregates 5 greifen, den kompakten Betätigungsknauf 25 erfassen und ihn ergonomisch sinnvoll nach vorn, in Fig. 1 und 2 also im Uhrzeigersinn, drehen. Dadurch verschiebt sich das Anschlagelement 22 in Fig. 1 und 2 nach rechts in die aktivierte Stellung, die dann in Fig. 3 und 4 dargestellt ist.

Zur Übertragung der Drehbewegung des Betätigungselements 25 auf das Anschlagelement 22 ist hier ein schraubenlinienförmiges Keilgetriebe 26 vorgesehen, das nicht selbsthemmend ausgeführt ist. Man erkennt das in Fig. 5 besonders gut. Ferner ist vorgesehen, daß das Betätigungselement 25 in der aktivierten Stellung des Anschlagelementes 22 einrastet. Das kann unmittelbar geschehen oder innerhalb des Keilgetriebes 26. Die Konstruktion mit dem Keilgetriebe 26 hat einen besonderen Vorteil dann, wenn das Anschlagelement 22 durch eine Feder 27 in Richtung der deaktivierten Stellung vorgespannt ist. Man erkennt das in Fig. 5 anhand der Druckfeder, die in einer Kammer des Lagers 28 an der Querachse 6 angeordnet ist. Dieses Lager 28 hat eine seitliche, in Richtung der Querachse 6 verlaufende Öffnung 29, in der der seitlich vorspringende Arm, der das Anschlagelement 22 bildet, in Fig. 5 von links nach rechts und umgekehrt verschoben werden kann. Durch die Öffnung 29 wird die Höhenlage des Anschlagelementes 22 fest vorgegeben. Dieses kann sich nur nach rechts oder links in der Öffnung 29 verschieben.

Die Rückverschiebung des Anschlagelementes 22 aus der aktivierten in die deaktivierte Stellung erfolgt durch die Feder 27. Da das Keilgetriebe 26 nicht selbsthemmend ist, wird bei dieser Bewegung des Anschlagelements 22 gleichzeitig das Betätigungselement 25 zurück in seine Ausgangsstellung gedreht. Zuvor muß allerdings die Einrastung des Betätigungselements 25 gelöst worden sein.

Am Anschlagelement 22 erkennt man ferner in Fig. 2 und Fig. 4 einen verstellbaren Anschlagpuffer 30. Dieser besteht aus einer Gewindestange mit einer endseitigen Rändelmutter, die in eine Gewindebohrung im Anschlagelement 22 eingeschraubt wird. Eine Kontermutter 31, ebenfalls ausgeführt als Rändelmutter, erlaubt es, den Anschlagpuffer 30 in der gewünschten Position für die beabsichtigte Nuttiefe zu fixieren.

Der erfindungsgemäß verwirklichte Nuttiefenanschlag ist zweckmäßig und ergonomisch angenehm zu betätigen. Er ist nicht fehleranfällig, stabil und ein versehentliches Betätigen der Nutfunktion ist kaum möglich, da sich das Anschlagelement 22 bei einem von Hand vorgenommenen Verschieben auf der körperlich vorhandenen Querachse 6 verkeilt. Der Bediener wird also intuitiv zu einer vorschriftsmäßigen Bedienung veranlaßt.

## Patentansprüche

1. Kappsäge mit
einem Träger (1), der eine Werkstückauflagefläche (2) bildet,
einer am Träger (1) angebrachten Halterung (4) und
einem an der Halterung (4) oberhalb des Trägers (1) um eine Querachse (6) schwenkbar angebrachten Sägeaggregat (5),
wobei das Sägeaggregat (5) um die Querachse (6) aus einer angehobenen Ruhestellung in eine abgesenkte Sägestellung und umgekehrt schwenkbar ist, und wobei das Sägeaggregat (5) an der Halterung (4) mittels einer in Sägerichtung verlaufenden Zugführung (18) in Sägerichtung verschiebbar gelagert ist,
wobei die tiefste Position des Sägeaggregates (5) in Sägestellung durch einen festen Anschlag definiert ist und eine etwas höher liegende Position des Sägeaggregates (5) durch ein manuell aktivierbares Anschlagelement (22) eines Nuttiefenanschlags (23) definiert ist, das aktiviert in der Bewegungsbahn und deaktiviert außerhalb der Bewegungsbahn eines Gegenanschlags (24) am Sägeaggregat (5) liegt,
**dadurch gekennzeichnet,**
**daß** der Nuttiefenanschlag (23) an der Querachse (6) angeordnet ist und das Anschlagelement (22) des Nuttiefenanschlags (23) durch eine Verschiebebewegung in Richtung der Querachse (6) aktivierbar und deaktivierbar ist.

2. Kappsäge nach Anspruch 1, **dadurch gekennzeichnet,**
**daß** das Anschlagelement (22) auf der körperlich vorhandenen Querachse (6) linear verschiebbar gelagert ist.

3. Kappsäge nach Anspruch 1 oder 2, **dadurch gekennzeichnet,**
**daß** das Anschlagelement (22) mit einem seitlich an der Halterung (4) sitzenden Betätigungselement (25), insbesondere einem Betätigungsknauf, gekoppelt ist und die Verschiebebewegung des Anschlagelements (22) durch eine Drehbewegung des Betätigungselements (25) um die Querachse (6) antreibbar ist.

4. Kappsäge nach Anspruch 3, **dadurch gekennzeichnet,**
**daß** die Kopplung zwischen dem Betätigungselement (25) und dem Anschlagelement (22) als schraubenlinienförmiges, nicht selbsthemmendes Keilgetriebe (26) ausgeführt ist.

5. Kappsäge nach Anspruch 3 oder 4, **dadurch gekennzeichnet,**
**daß** das Betätigungselement (25) in der aktivierten Stellung des Anschlagelements (22) einrastet.

6. Kappsäge nach einem der Ansprüche 1 bis 5, **dadurch gekennzeichnet,**
**daß** das Anschlagelement (22) durch eine Feder (27) in Richtung seiner deaktivierten Stellung vorgespannt ist.

7. Kappsäge nach einem der Ansprüche 1 bis 6, **dadurch gekennzeichnet,**
**daß** das Anschlagelement (22) selbst einen verstellbaren Anschlagpuffer (30) aufweist.

## Claims

1. Circular saw with a carrier (1), which forms a workpiece support surface (2), a mounting (4) arranged on the carrier (1) and a sawing aggregate (5) arranged on the mounting (4) above the carrier (1), which can be pivoted around a lateral axle (6), whereby the sawing aggregate (5) is pivotable around the lateral axle (6) from a raised inoperative position into a lowered sawing position and vice versa, and
whereby the sawing aggregate (5) is supported on the mounting to allow displacement in the direction of sawing (4) by means of a cable guide (18) whereby the lowest position of the sawing aggregate (5) is defined by a fixed stop and a slightly higher position of the sawing aggregate (5) is defined by a manually activated stop element (22) of a cutting depth stop (23), which, when activated lies in the path of movement of the saw and when de-activated lies outside the path of movement of a counter-stop (24) on the sawing aggregate (5),
**characterised in that** the cutting depth stop (23) is positioned on the lateral axle (6) and the stop element (22) of the cutting depth stop (23) can be activated or de-activated by a movement in the direction of the lateral axle (6).

2. Circular saw according to Claim 1 above, **characterised in that** the stop element (22) is mounted on the physically existing lateral axle (6) in such a way that it can be moved linearly.

3. Circular saw according to Claim 1 or 2 above, **characterised in that** the stop element (22) is connected to an actuating element (25) located laterally in relation to the mounting (4), which is in particular an operating knob, and the displacement movement of the stop element (22) can be effected by a rotary movement of the actuating element (25) around the lateral axle (6).

4. Circular saw according to Claim 3 above, **characterised in that** the coupling between the actuating element (25) and the stop element (22) is in the form of a helical non-selflocking wedge gear (26).

5. Circular saw according to Claim 3 or 4 above, **characterised in that** the actuating element (25) engages in the activated position of the stop element (22).

6. Circular saw according to any of the above Claims 1 to 5, **characterised in that** the stop element (22) is pre-stressed by a spring (27) in the direction of its de-activated position.

7. Circular saw according to any of the above Claims 1 to 6, **characterised in that** the stop element (22) itself comprises an adjustable buffer stop (30).

## Revendications

1. Scie à onglet avec table supérieure, comportant
un support (1), qui forme une surface d'appui (2) pour une pièce à usiner, et
un agrégat de sciage (5), monté au-dessus du support (1) au moyen d'une fixation (4), et pivotant autour d'un axe transversal (6),
dans lequel l'agrégat de sciage (5) peut être basculé autour de l'axe transversal (6) d'une position de repos relevée dans une position de sciage abaissée et réciproquement, et
dans lequel l'agrégat de sciage (5) est coulissant sur roulement dans la direction de sciage sur la fixation (4) au moyen d'un rail (18) s'étendant dans la direction de sciage,
dans lequel la position la plus basse de l'agrégat de sciage (5) est définie en position de sciage au moyen d'une butée et une position située quelque peu plus haute de l'agrégat de sciage (5) est définie au moyen d'un élément de butée (22) d'une butée d'arrêt inférieure de gorge (23), pouvant être actionné manuellement, qui est activé dans la trajectoire du mouvement et désactivé hors de la trajectoire du mouvement d'une contre butée (24) en appui contre l'agrégat de sciage (5),
**caractérisée en ce que,**
la butée d'arrêt inférieure de gorge (23) est disposée sur l'axe transversal (6) et l'élément de butée (22) de la butée d'arrêt inférieure de gorge (23) peut être activé ou désactivé par un mouvement coulissant en direction de l'axe transversal (6).

2. Scie à onglet selon la revendication 1, **caractérisée en ce que**,
l'élément de butée (22) est monté sur roulement sur l'axe transversal (6) physiquement disponible et mobile linéairement par coulissement.

3. Scie à onglet selon les revendications 1 ou 2, **caractérisée en ce que**, l'élément de butée (22) est couplé avec un élément d'actionnement (25) monté latéralement sur une fixation (4), en particulier un pommeau d'actionnement, et le déplacement de coulissement de l'élément de butée (22) peut être enclenché autour de l'axe transversal (6) par un mouvement de rotation de l'élément d'un élément d'actionnement (25).

4. Scie à onglet selon la revendication 3, **caractérisée en ce que**,
le couplage entre l'élément d'actionnement (25) et l'élément de butée (22) est configuré comme un entraînement conique (26) non auto freiné à vis linéaire.

5. Scie à onglet selon les revendications 3 ou 4, **caractérisée en ce que**, l'élément d'actionnement (25) s'enclenche lorsqu'il est dans la position activée de l'élément de butée (22).

6. Scie à onglet selon l'une des revendications 1 à 5, **caractérisée en ce que**,
l'élément de butée (22) est précontraint par un ressort (27) en direction de sa position désactivée.

7. Scie à onglet selon l'une des revendications 1 à 6, **caractérisée en ce que**,
l'élément de butée (22) comporte lui-même une butée d'arrêt (30) réglable.
